# EUROPEAN PATENT APPLICATION

(11) **EP 4 576 644 A1**
(43) Date of publication of application: **25.06.2025**
(21) Application number: 23218733.6
(22) Date of filing: 20.12.2023
(51) Int. Cl.: H04L 9/00, G06Q 10/02, H04L 9/40

(54) **METHOD FOR GENERATING EVENT-TICKETS**

(30) Priority: 18.12.2023 PT 2023119138
(71) Applicant: NOS Inovação, S.A., 4460-191 Porto (PT)
(72) Inventor: PINTO SEQUEIRA DOS SANTOS GRAÇA, JORGE FILIPE, SENHORA DA HORA, PORTO (PT); NUNES FERREIRA, JOÃO MIGUEL, SENHORA DA HORA, PORTO (PT); COUTINHO DE SOUSA, JOANA, SENHORA DA HORA, PORTO (PT)
(74) Representative: do Nascimento Gomes, Rui

(57) **Abstract**

The present application relates to a method for generating event-tickets in a distributed ledger, and discloses an infrastructure and processing scheme involving different computational authorities (10, 20). A ticketing authority (10) deploys smart-contracts (11) in a blockchain (1), which are configured to generate NFT tickets and to assign them to owner entities, according to a particular set of rules. In addition, a promoter authority (20) deploys smart-contracts (21, 23) in the blockchain (1), which are configured to create events according to a particular set of rules, and to which the event-tickets being provided by the ticketing authority (10) are to be associated. Due to the execution and deployment of smart-contracts, the rules involved in both the event and event-ticket generation process, as well as the access to the respective metadata, reside in an immutable form on the blockchain (1), thus enabling a secure, traceable and transparent solution for generating event-tickets.

## Description

### FIELD OF THE APPLICATION

The present application relates generally to the field of digital access control, and more particularly to the use of blockchain infrastructure to generate event tickets.

### PRIOR ART

Access to events in a physical or virtual environment, such as, for example, concerts or webinars, is associated with an access control based on the generation and subsequently validation of a respective entry pass or ticket.

For example, in the context of a concert, the access to the event may be guaranteed by acquiring a ticket that is generated by a ticketing authority and that must be validated at the event's entrance.

However, an event-ticket can be copied and forged and used by people who do not have a legitimate right to do so. Furthermore, in the context of digital tickets, these are normally hosted on servers or in a cloud infrastructure belonging to the ticketing authority, which requires that data associated with each ticket owner be processed in a way that guarantees its privacy and security. This requirement is reflected in complex and time-consuming data processing.

In addition, current digital ticketing infrastructures do not allow tracking of ticket holders, in the case of ticket resale or transmission. In this context, several solutions have emerged that use blockchain infrastructure to generate tickets in the form of digital assets. Particularly, non-fungible tokens (NFT) ticketing, in the context of event ticketing, has several advantages over conventional paper or digital ticketing, providing a secure, transparent and efficient way of issuing and managing tickets. In fact, NFTs are significantly harder to forge or duplicate than conventional tickets since they are stored on a blockchain, which enables transparency and traceability, making it possible to trace the ownership and origin of the ticket. This lowers the risk of fraud and fake tickets by allowing event organizers to determine that only authentic tickets are used to enter an event.

However, NFT ticketing is a relatively new concept that is not yet widely used in the ticketing industry mainly because there is still a lack of infrastructure to enable it. In fact, the existing solutions are still very basic and do not allow for a complete and effective response to all the dynamics that an access control scenario imposes, especially in terms of generation of event tickets.

The present solution intended to innovatively overcome such issues.

### SUMMARY OF THE APPLICATION

The present application relates to a method of generating event-tickets in a distributed ledger. In particular, it is disclosed an infrastructure and processing scheme involving different computational authorities that are operatively connected to enable the generation of event-tickets in a secure, traceable and transparent way.

According to the object of the present application, a ticketing authority is an authorized ticketing authority, able to comply with an event-ticket generation process and a promoter authority is an authorized promoter authority, able to comply with an event creation and management process, said processes being implemented using smart-contracts that are defined and are available on blockchains. More particularly, a ticketing authority is responsible for deploying smart-contracts in a blockchain infrastructure, which are configured to generate NFT tickets and to assign them to owner entities, according to a particular set of rules. In addition, a promoter authority is responsible for deploying smart-contracts in a blockchain infrastructure, which are configured to create events, according to a particular set of rules, to which the event-tickets being provided by the ticketing authority will be associated. In a practical scenario, a person who wishes to purchase a ticket for an event may access to a web service associated with a promoter authority to which the event relates, using its digital wallet, which contain an identifier representing a digital account to which the NFT ticket to be purchased is to be registered. Consequently, once the purchase action is completed, the NFT ticket is registered in the account associated with the owner's digital wallet, that is identified by an owner entity identifier.

The solution described in the present application aims to solve the technical problem of ticketing authenticity during the ticket generation phase, with regard to uniqueness and ownership of an event-ticket.

Due to the execution and deployment of smart-contracts in a blockchain infrastructure, it is guaranteed that the rules involved in both the event creation process and the event-ticket generation process, as well as the access to the respective metadata, reside in an immutable form on the blockchain. Consequently, it is this decentralized approach that enables a secure, traceable and transparent solution for generating NFT event-tickets.

### DESCRIPTION OF FIGURES

Figure 1 - block diagram representation of an embodiment of the event-ticket generation infrastructure described in the present application, wherein the reference signs represent:
   1- blockchain infrastructure;
   10 - ticketing authority;
   11- event-ticket smart-contract;
   20 - promoter authority;
   21 - event-promoter smart-contract;
   23 - event smart-contract.
Figure 2 - block diagram illustrating the generation of NFT tickets, wherein the reference signs represent:
   10 - ticking authority;
   11- event-ticket smart-contract;
   12 - NFT ticket generator routine;
   IDN - NFT ticket identifier, assigned to an owner entity identified by an identifier.
Figure 3 - block diagram illustrating the creation of events and the association of NFT tickets to events, wherein the reference signs represent:
   11- event-ticket smart-contract;
   20 - promotor authority;
   21 - event-promoter smart-contract;
   22 - storage means to store event data;
   23 - event smart-contract;
   IDN - NFT ticket identifier, assigned to an owner entity identified by an identifier.

### DETAILED DESCRIPTION

The more general and advantageous configurations of the present application are described in the Summary of the application. Such configurations are detailed below in accordance with other advantageous and/or preferred embodiments of implementation.

It is disclosed a decentralized approach for generating NFT tickets for events.

A NFT, non-fungible token, is formed by encoded data on a blockchain. The token includes a unique identifier, a smart-contract, and underlying content, e.g., an image, video or audio file. A NFT may be created using any standard library known for this purpose, such as ERC-721.ln this context, a ticket to an event is part of the NFT's underlying content, and may be in the form of an image, for example. As for smart-contracts, they are self-executing agreements that live on blockchain-based platforms, and are a set of coded computed functions that trigger self-executing actions performed by computing nodes within a blockchain infrastructure. Therefore, in the context of the present application, smart-contracts are used to establish and record immutable contractual relationships between the intervening parties, as will be explained below.

In the context of the present application, an event may relate to an occurrence of any nature, such as social, cultural, artistic or sporting, that is organized by promoter authorities (20) with institutional, community or promotional objectives, among others. As an example, an event may concern a concert, a show, a contest, a ceremony, a seminar, a conference or a lecture. An event may take place in a particular physical or virtual space, at a specific day and time, and for a defined period of time, which may be expressed in minutes, hours or days. Thus, an event is characterized by an event time duration that defines the start and end day and time of the event, during which the event takes place. Additionally, an event time duration may be divided into periods, referred to as event-time periods. For example, considering a 3-day event, the event time duration is counted from the start date and time of the first day to the end date and time of the third day, and an event-time period may be defined as being a period of one day. Therefore, an event-ticket may be associated to an event, or to each event-time period. The access to an event is conditioned on participants who have acquired the respective access authorization. Also in the context of the present application, an event access authorization takes the form of a NFT ticket that is provided by a ticketing authority (10), may be transacted for lending purposes, and is validated by a validating authority upon entry to the event. In this particular context, the event time duration represents the period during which an event-ticket shall be validated, in order to prevent the event-ticket from being validated for a date that does not correspond to the event, or after the event has ended.

The decentralized approach that is presented runs on a distributed ledger comprising a blockchain infrastructure (1) that supports the execution of smart-contracts (11, 21, 23) and as a decentralized database it, stores all the interactions between different authorities (10, 20), for the purposes of generating, monitoring, lending and validating event tickets, which by becoming immutable, transparent and traceable, allows to significantly reduce the risk of fraud, related to the forgery or duplication of an event-ticket or the validation of an event-ticket by an unauthorized ticket holder. In the context of such decentralization approach, each authority and each participant in the process of acquisition, transaction for the purpose of lending or validating a NFT ticket for an event, as well as the NFT ticket itself, and the smart-contracts whose execution and deployment on the blockchain guarantee the advantages already mentioned, have an associated identifier. This identifier may be a unique blockchain identification address, like a hexadecimal code. Additionally, as an exemplary embodiment, the blockchain infrastructure may be Ethereum.

Also in the context of the present application, the association between smart-contracts, authorities and participants expresses a technical implementation infrastructure that allows operational coupling between them for the purpose of generating, manipulating and validation NFT tickets.

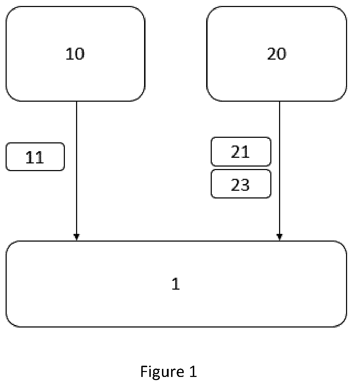

Figure 1 illustrate a block diagram identifying the event-ticket generation infrastructure described in the present application.

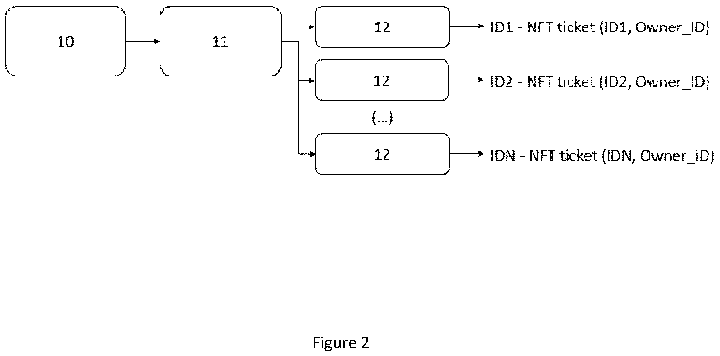

Figure 2 specifies the process of generating a NFT ticket. In particular, the ticketing authority (10) is responsible for deploying in the blockchain the event-ticket smart-contract (11), that assigns an owner entity, identified by an owner entity identifier or owner_ID, to a NFT ticket identified by a NFT ticket identifier (IDN). For this purpose, the event-ticket smart-contract (11) may execute a NFT ticket generator routine (12), such as a SafeMint function, having as input parameters at least the owner entity identifier.

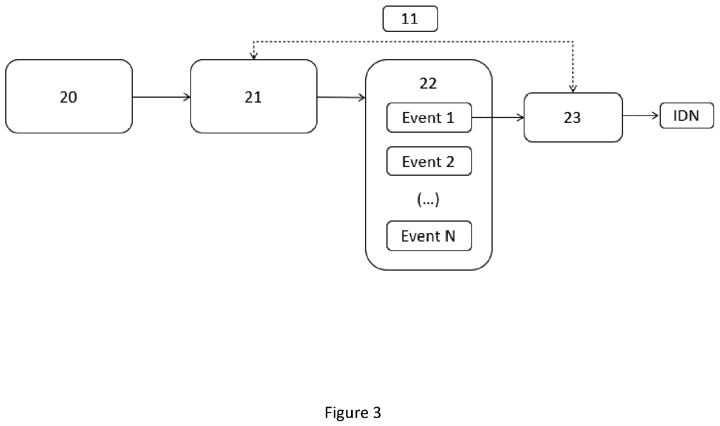

Figure 3 relates to the process of creating an event and associating a ticketing authority to each event. More particularly, a promoter authority (20) is deploying in the blockchain event-promoter smart-contracts (21) to assign a promoter authority identifier to each created event. The promoter authority, identified by the respective identifier, in which the deploy is registered may have event management privileges, namely creating and cancelling events, with all events associated with said promotor authority being registered in a data structure array (22). Associated to each event, there is an event-smart-contract (23). To create this smart-contract (23), it is necessary to provide the unique identifier of the event-ticket smart-contract (11), that is responsible for generating event-tickets (IDN), and the unique identifier of the promoter authority (20), as only that entity has the permission to manage the event, namely the days on which the event takes place, as well as the definition/authorization of allowing ticket lending agreements.

### EMBODIMENTS

In a preferred embodiment of the method for generating event-tickets it is comprised by the following steps:
- generating an event-ticket smart-contract (11), to be associated to at least one ticking authority (10), identified by an identifier; the event-ticket smart-contract (11) generates a NFT ticket, identified by a NFT ticket identifier (IDN), and assigns it to an owner entity identifier, that identifies an owner entity;
- deploying, by a ticketing authority (10), an event-ticket smart-contract (11) in the digital ledger, thereby assigning to said smart-contract (11) an identifier, to associate a respective ticketing authority identifier to a respective event-ticket smart-contract identifier;
- generating an event-promoter smart-contract (21), to be associated to at least one promoter authority (20), identified by an identifier; the event-promoter smart-contract (21) creates an event defined by an event time duration parameter;
- generating an event smart-contract (23), to be associated to each event; the smart-contract (23) being configured to, for each event, associate a promoter authority identifier to an event-ticket smart-contract identifier;
   and
- deploying, by a promoter authority (20), in the digital ledger:
   - an event-promoter smart-contract (21), assigning to said smart-contract (21) an identifier, to associate a respective promoter authority identifier to said smart-contract identifier; and
   - an event smart-contract (23), assigning to said smart-contract (23) an identifier, to associate a NFT ticket to be generated by an even-ticket smart-contract (11), to an event to be created by an event-promoter smart-contract (21).

In one embodiment, an event-ticket smart contract (11) generates a NFT ticket to an event based on event data, said event data may relate to an event name and an event acronym.

In another embodiment, an event-ticket smart contract (11) executes a NFT ticket generator routine (12) to generate a NFT ticket and to attribute to said NFT ticket an identifier (IDN). The NFT ticket generator routine (12) may generate a NFT ticket by having as input parameters at least the owner entity identifier. Additionally, the NFT ticket generator routine (12) may generate a NFT ticket by having as additional input parameters an URL address to a NFT ticket image. For generating NFT tickets the routine (12) may implement any standard library known for this purpose, such as ERC-721.

In another embodiment, an event-ticket smart-contract (11) executes an access control routine to attribute an access permission level to a NFT ticket being generated. More particularly, the access control routine attributes an access permission level to a NFT ticket based on a permission model consisting of one or more permission sets. In this context, a permission model is comprised of a plurality of hierarchical access permission levels, to restrict access to an exclusive event's location, and wherein each access permission level is associated to a permission set comprised of one or more rules applicable to a NFT ticket to allow or deny access to an exclusive event's location to which a particular access permission level is required.

In another embodiment, the NFT ticket generator routine (12) generates a NFT ticket based on an attributed permission access level.

In another embodiment, the access control routine may associate each NFT identifier (IDN) with a respective access permission level attributed.

In another embodiment, an event-promoter smart-contract (21) may create an event, based on at least: an event name, an URL address to where images for NFT ticket generation are stored and an event-ticket smart-contract identifier. Additionally, an event-promoter smart-contract (21) may also delete events associated to a promoter authority identifier. A promotor authority (20) may implement a data structure array arranged to store, for each event associated to the respective promoter authority identifier: an event name, an URL address to where images for NFT ticket generation are stored, an event-ticket smart-contract identifier and an event smart-contract identifier.

In another embodiment, the identifier assigned to:
a ticketing authority (10), a promotor authority (20), an owner entity, and to
an event-ticket smart-contract (11), an event promoter smart-contract (21) and to an event smart-contract (23),
is a unique blockchain identification address; optionally, said address is a hexadecimal code.

In another embodiment, the blockchain infrastructure (1) is Ethereum.

The present application also describes a system for generating event-tickets in a digital ledger, comprising one or more processors configured to implement the method previously described.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

## Claims

1. A method for generating event-tickets in a digital ledger, the digital ledger comprising a blockchain infrastructure adapted to support the execution of smart-contracts; the method comprising the following steps:
- generating an event-ticket smart-contract (11), to be associated to at least one ticking authority (10), identified by an identifier; the event-ticket smart-contract (11) generates a NFT ticket, identified by a NFT ticket identifier (IDN), and assigns it to an owner entity identifier, that identifies an owner entity;
- deploying, by a ticketing authority (10), an event-ticket smart-contract (11) in the digital ledger, thereby assigning to said smart-contract (11) an identifier, to associate a respective ticketing authority identifier to a respective event-ticket smart-contract identifier;
- generating an event-promoter smart-contract (21), to be associated to at least one promoter authority (20), identified by an identifier; the event-promoter smart-contract (21) creates an event defined by an event time duration parameter;
- generating an event smart-contract (23), to be associated to each event; the smart-contract (23) being configured to, for each event, associate a promoter authority identifier to an event-ticket smart-contract identifier;
and
- deploying, by a promoter authority (20), in the digital ledger:
- an event-promoter smart-contract (21), assigning to said smart-contract (21) an identifier, to associate a respective promoter authority identifier to said smart-contract identifier; and
- an event smart-contract (23), assigning to said smart-contract (23) an identifier, to associate a NFT ticket to be generated by an even-ticket smart-contract (11), to an event to be created by an event-promoter smart-contract (21).

2. The method according to claim 1, wherein an event-ticket smart contract (11) generates a NFT ticket to an event based on event data; said event data related to an event name and an event acronym.

3. The method according to claims 1 or 2, wherein an event-ticket smart contract (11) executes a NFT ticket generator routine (12) to generate a NFT ticket and to attribute to said NFT ticket an identifier (IDN).

4. The method according to claim 3, wherein the NFT ticket generator routine (12) generates a NFT ticket by having as input parameters at least the owner entity identifier.

5. The method according to claim 4, wherein the NFT ticket generator routine (12) generates a NFT ticket by having as additional input parameters an URL address to a NFT ticket image.

6. The method according to any of the previous claims, wherein the event-ticket smart-contract (11) executes an access control routine to attribute an access permission level to a NFT ticket being generated; the access control routine attributes an access permission level to a NFT ticket based on a permission model consisting of one or more permission sets.

7. The method according to claim 6, wherein a permission model is comprised of a plurality of hierarchical access permission levels, to restrict access to an exclusive event's location; and wherein
each access permission level being associated to a permission set comprised of one or more rules applicable to a NFT ticket to allow or deny access to an exclusive event's location to which a particular access permission level is required.

8. The method according to any of the previous claims 3 or 5 and to claims 6 or 7, wherein the NFT ticket generator routine (12) generates a NFT ticket based on an attributed permission access level.

9. The method according to claim 3 and to any of the claims 6 to 8, wherein the access control routine associates each NFT identifier (IDN) with a respective access permission level attributed.

10. The method according to any of the previous claims, wherein the event-promoter smart-contract (21) creates an event, based on at least: an event name, an URL address to where images for NFT ticket generation are stored and an event-ticket smart-contract identifier.

11. The method according to any of the previous claims, wherein the event-promoter smart-contract (21) deletes events associated to a promoter authority identifier.

12. The method according to claims 10 or 11 as dependent of claim 10, wherein a promotor authority (20) implements a data structure array arranged to store, for each event associated to the respective promoter authority identifier: an event name, an URL address to where images for NFT ticket generation are stored, an event-ticket smart-contract identifier and an event smart-contract identifier.

13. The method according to any of the previous claims, wherein the identifier assigned to:
a ticketing authority (10), a promotor authority (20), an owner entity, and to
an event-ticket smart-contract (11), an event promoter smart-contract (21) and to an event smart-contract (23),
is a unique blockchain identification address; optionally, said address is a hexadecimal code.

14. The method according to any of the previous claims, wherein the blockchain infrastructure is Ethereum.

15. System for generating event-tickets in a digital ledger, comprising one or more processors configured to implement the method of any of the previous claims 1 to 14.
